# EUROPEAN PATENT APPLICATION

(11) **EP 2 023 224 A1**
(43) Date of publication of application: **11.02.2009**
(21) Application number: 08012299.7
(22) Date of filing: 08.07.2008
(51) Int. Cl.: G05B 19/4065

(54) **Numeric control device of a machine tool for detecting abnormality of a spindle**

(30) Priority: 23.07.2007 JP 2007191278
(71) Applicant: Fanuc Ltd, Yamanashi 401-0597 (JP)
(72) Inventor: Masuya, Michi, Minamitsuru-gun Yamanashi 401-0597 (JP); Yoshimura, Kazuki, Minamitsuru-gun Yamanashi 401-0597 (JP); Nakazawa, Yasuyuki, Minamitsuru-gun Yamanashi 401-0597 (JP)
(74) Representative: Thum, Bernhard

(57) **Abstract**

A numeric control device with a simple structure of a machine tool, capable of detecting a defect of a spindle or a spindle motor of the machine tool and automatically informing an operator of the defect. A numeric control device has a first storing part, a calculating part and a judging part. The first storing part stores master vibration data of the spindle or the spindle motor, the master vibration data being prepared by associating data of the vibration outputted from a vibration sensor arranged on the spindle or the spindle motor with an operation pattern for detecting the defect of the spindle or the spindle motor. When a difference value between the master vibration data and newly obtained data exceeds a predetermined reference value, the judging part determines that the new data is abnormal.

## Description

### RELATED APPLICATIONS

The present application claims priority from Japanese Patent Application No. 2007-191278, filed on July 23, 2007, the entire content of which is fully incorporated herein by reference.

### BACKGROUND OF THE INVENTION

### 1. Field of the Invention

The present invention relates to a numeric control device of a machine tool, in particular, a numeric control device capable of detecting a defect of a spindle or a spindle motor of a machine tool.

### 2. Description of the Related Art

When a problem occurs in a rotating part, such as a bearing, of a spindle or a spindle motor of a machine tool, it may take a long time to replace the rotating part with another rotating part. As a result, a product line constituted by the machine tool may be stopped for a long time and a user of the line may suffer a serious financial loss. Therefore, there is an attempt to mount a vibration sensor on the spindle or the spindle motor in order to monitor the vibration of the spindle or the motor, whereby a problem of the rotating part may be detected and prevented from occurring.

US Patent Publication No. 2003/0103827 A1 discloses a spindle having a data acquisition element for acquiring the temperature and the vibration of a spindle, a data storage element for storing the detected data, and a data processing element for processing the stored data. This Patent Publication describes that the operating behavior of the spindle can be drawn by reading the data storage element, and causes of functional disruption can be determined.

Japanese Unexamined Patent Publication No. 2005-164315 discloses a facility diagnostic system for detecting the deterioration of a bearing or an impeller of a rotating part of a pump or a motor and for avoiding the pump or the motor failure. In this system, data of a strain amount of the pump or the motor is transmitted to a base station terminal by a radio wave, and the terminal calculates the vibration frequency of the pump or the motor based on the received data, and then analyzes the vibration frequency to detect the deterioration of the pump or the motor.

Japanese Unexamined Patent Publication No. 11-170142 discloses a device for monitoring abnormality of a spindle, in which a threshold stored in a memory is compared to a vibrational acceleration of a spindle head, and an alarm is outputted based on the result.

Japanese Unexamined Patent Publication No. 62-43538 discloses an abnormality monitor for a rotating part of a rotary machine, in which a plurality of displacement sensors are arranged on a stationary part opposed to the rotating part so as to detect an amount of vibration of a plurality of sites of the rotating part. Concretely, a target positioned on the rotating part is detected by a rotation phase detector and a pulse signal obtained by the detector is used as a trigger for A/D converting an output of the displacement sensor. The A/D converted output is compared to a normal vibration mode data which is previously set, in order to determine the abnormality of the rotating part.

However, in monitoring the vibration of the spindle or the spindle motor of the machine tool, when a load is applied to the spindle, such as during cutting work, the vibration includes a component of the cutting work. Therefore, it is difficult to detect the defect of the spindle or the spindle motor.

In order to detect the defect of the spindle or the spindle motor, a reliable criterion is necessary, based on which operation data in a certain condition is determined to be abnormal. Generally, the determining whether certain data is abnormal or defective is often based on an experience or a qualitative trend. Therefore, a quantitative and reasonable criterion is desired in relation to various operation conditions.

### SUMMARY OF THE INVENTION

An object of the present invention is to provide a numeric control device with a simple structure of a machine tool, capable of detecting a defect of a spindle or a spindle motor of the machine tool and automatically informing an operator of the defect.

According to the present invention, there is provided a numeric control device for detecting an error or a defect of a motor or a spindle motor of a machine tool, the numeric control device comprising: a first storing part for storing master vibration data of the spindle or the spindle motor, the master vibration data being prepared by associating data of the vibration outputted from a vibration sensor arranged on the spindle or the spindle motor with an operation pattern for detecting the defect of the spindle or the spindle motor, obtained by rotating the spindle or the spindle motor in no-load condition; a calculating part for calculating a difference value between newly measured data according to the operation pattern and the master vibration data stored in the first storing part; a judging part for determining that the measured data is abnormal when the difference value calculated by the calculating part exceeds a predetermined reference value; and an outputting part for outputting information regarding the measured data when the judging part determines that the measured data is abnormal.

A preferable example of the master vibration data is data of the vibration according to the operation pattern when initial adjustment or maintenance check of the machine tool is completed.

The numeric control device may further comprise a second storing part for storing a plurality of data of the vibration in relation to one operation pattern, and an outputting part for outputting information of a change of the vibration based on the plurality of data of the vibration.

The operation of the first and second storing parts, the calculating part, the judging part and the outputting part may be prepared as a maintenance check mode of the machine tool.

The operation pattern may be prepared as a plurality of selective maintenance check programs.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows the configuration of a numeric control device according to the invention; and

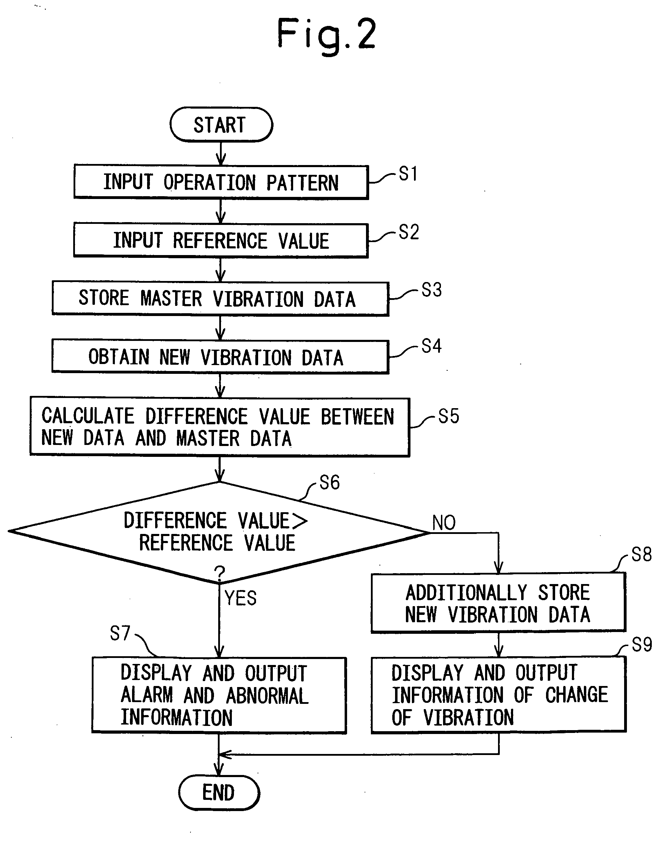

Fig. 2 is a flowchart showing a process in a maintenance mode using the numeric control device of the invention.

### DETAILED DESCRIPTION

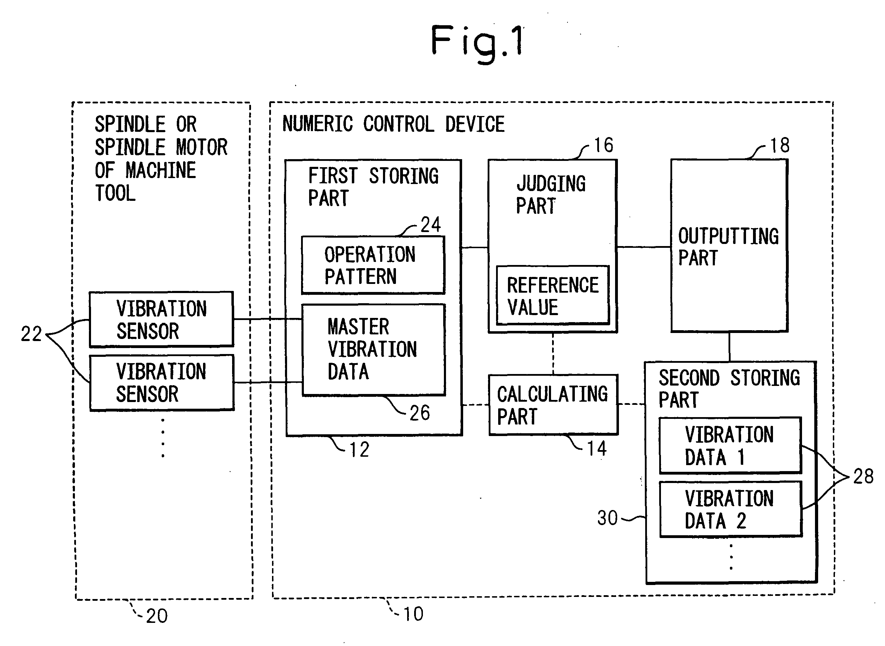

Fig. 1 shows the configuration of a numeric control device 10 according to the present invention. Numeric control device 10 has a first storing part 12, a calculating part 14, a judging part 16 and an outputting part 18. First storing part 12 stores data of the vibration outputted from a vibration sensor 22 attached to a schematically illustrated spindle or a spindle motor 20 of a machine tool, as master vibration data 26 associated with an operation pattern 24 for detecting an abnormality or defect of the spindle. The concrete operation pattern may be represented by a program as shown below, constituted by the combination of a plurality of sets including the number of the revolutions and an operating time at the number. The program may be stored in first storing part 12 of numeric control device 10.

### Example program

1: Normal rotation command
2: 1, 500 min⁻¹, 30 seconds
3: 3,000 min⁻¹, 30 seconds
4: 6, 000 min⁻¹, 30 seconds
5: 9, 000 min⁻¹ 30 seconds
6: 12, 000 min⁻¹, 30 seconds
7: Stop command

In measuring of the vibration of the spindle according to the above operation pattern, an actual cutting operation is not performed and no-load is applied to the spindle, for the following reasons. First, it is difficult to detect vibration due to an abnormality or defect of the spindle, if the vibration due to the cutting operation is added. Generally, a precision bearing is used for the spindle or the spindle motor of the machine tool in order to improve the machining accuracy. Further, a balance of the rotating part of the spindle is adjusted to a very good condition. Therefore, an initial vibration of the spindle or the spindle motor is adjusted to a very small level, for example, the amplitude of the vibration is less than 5µm. On the other hand, although depending on the condition, the vibration due to the cutting operation is larger than the initial vibration. Since the vibration less than 1µm may be detected as the defect in the present invention, it is difficult to detect such a small vibration when the vibration due to the cutting is added.

Second, the vibration generated by the cutting operation may be varied widely. The vibration during the cutting operation may be varied widely due to the type of a tool attached to the spindle, and/or the shape or material of a workpiece to be cut. Further, even when the same kind of workpieces are machined by using the same kind of tools, the vibration may be varied due to the sharpness of the tip of each tool, whereby an abnormality or defect is difficult to be detected.

A value of the vibration in each of the number of the revolutions in the above operation pattern, outputted from the vibration sensor during rotation of the spindle, is stored in first storing part 12 of numeric control device 10 as vibration data as shown in Table 1. The vibration data is obtained when the machine tool is newly used (or initial adjustment of the machine tool is completed) or when maintenance check of the machine tool is completed.. The vibration data is used as master vibration data 26 for comparing vibration data obtained afterward with the master vibration data in order to check the abnormal or the defect. Therefore, the master vibration data is not updated in principle. As the value of the vibration corresponding to each number of the revolutions, average value or a peak value of the vibration during the rotation at each number of the revolutions in the operation pattern may be stored.

**Table 1 Example of vibration data in no-load operation**

| No. | Number of Revolutions [min⁻¹] | Value of Vibration [µm] |
|---|---|---|
| 1 | 1,500 | 1 |
| 2 | 3,000 | 1 |
| 3 | 6,000 | 2 |
| 4 | 9,000 | 2 |
| 5 | 12,000 | 3 |

The operator of the machine tool periodically operates the spindle so as to obtain a new vibration data 28. Newly obtained data 28 may be stored in second storing part 30 as shown in Fig. 1. By using additionally stored vibration data 28, information regarding a change of the vibration may be outputted to outputting part 18 of numeric control device 10 or another external display part. At this point, an example of the change of the vibration is a graph showing the change of the vibration data over time.

Next, the new vibration data 28 will be compared to the master vibration data stored in first storing part 12. Concretely, calculating part 14 of numeric control device 10 as shown in Fig. 1 calculates a difference value between the new vibration data and the master vibration data, and then, judging part 16 determines whether the calculated difference value exceeds a predetermined reference value. In other words, judging part 16 determines that new vibration data is abnormal when the difference value exceeds the predetermined reference value.

Outputting part 18 of numeric control device 10 as shown in Fig. 1 outputs information from judging part 16. concretely, outputting part 18 may be a display part capable of displaying the information, or, may be a part for transmitting an output signal regarding the information to another display part. If judging part 16 determines that the new vibration data is abnormal, then outputting part 18 displays the information or transmits the information to the other display part. As the information judged abnormal, as shown in Table 2, data of the vibration or the difference value which is judged abnormal. In the example of Table 2, a difference value between new vibration data and the master vibration data at the number of the revolutions of 12,000 min⁻¹, exceeds the reference value. Therefore, the vibration data at this number of the revolutions is judged abnormal, and then this judgment result is displayed.

**Table 2 Example of judgment of vibration data**

| No. | A | B | C | D | E | F |
|---|---|---|---|---|---|---|
| 1 | 1,500 | 1 | 1 | 0 | 1 | Normal |
| 2 | 3,000 | 1 | 1 | 0 | 1 | Normal |
| 3 | 6,000 | 2 | 2.5 | 0.5 | 1 | Normal |
| 4 | 9,000 | 2 | 2.5 | 0.5 | 1 | Normal |
| 5 | 12,000 | 3 | 5 | 2 | 1 | Abnormal |

where A: Number of revolutions [min⁻¹]
B: Master vibration data [µm]
C: Newly obtained vibration data [µm]
D: Difference value of vibration [µm]
E: Reference value [µm]
F: Result of judgment

According to the numeric control device as described above, the operator may carry out the maintenance of the spindle or the spindle motor based on the information which is judged abnormal. The reference value and the operation pattern may be suitably.modified depending on the condition of use or the like of the machine tool.

As described above, the invention is characterized in that the operation pattern is previously prepared, the spindle is operated in no-load condition and the vibration data according to the operation pattern is stored, and the abnormal or the defect may be judged when the difference value between the stored vibration data and newly obtained vibration data in no-load condition according to the same operation pattern exceeds the predetermined reference value.

In the invention, two aspects may be possible as the operation of the machine tool using the numeric control device of the invention. First, a maintenance check mode is prepared in the numeric control device, as well as a normal operation mode, such that the above procedure may be easily performed. When the operator selects the maintenance check mode, a series of operations including inputting the operation pattern, storing the vibration data, setting the reference value, judging the abnormal of the vibration data, and displaying or outputting the information judged abnormal, may be performed by easy selecting operation.

Concretely, the operator of the machine tool selects a maintenance check mode when an initial operation of the machine tool is started or the maintenance of the machine tool is completed, in order to input the operation pattern (step S1), input the reference value (step S2) and store the master vibration data in no-load condition obtained by the operation pattern (step S3). Then, the operator periodically selects the maintenance check mode, in order to obtain new vibration data in no-load condition according to the inputted operation pattern (step S4), calculate the difference value by comparing the new vibration data to the master data (step S5) and compare the difference value to the reference value (step S6). In addition, the operation pattern and the reference value may not be inputted by the operator, but may be previously set based on past data or experience.

When the difference value exceeds the reference value, it is determined that an error or a trouble has occured, and an alarm or information regarding the error is displayed or outputted (step S7). On the other hand, when the difference value is equal to or smaller than the reference value, it is determined that the spindle or the spindle motor is in its normal state, and new vibration data is additionally stored (step S8). Then, information regarding a change of vibration is displayed or outputted (step S9).

In another aspect, a particular mode such as a maintenance check mode is not prepared, instead, in the normal operation mode, an operation pattern for maintenance is prepared as a maintenance check program. In the maintenance check program, processes for obtaining vibration data, determining an error, displaying and/or outputting information regarding the error may be automatically carried out. In this case, by running the maintenance program, for example before the start of the operation of the machine tool every day, new vibration data may be obtained and the abnormal or the error of the spindle or the spindle motor may be determined. Different maintenance check programs may be prepared, such that a suitable program may be selected corresponding to application of the maintenance. In addition, storing the master vibration data and/or setting the reference data may be carried out in the normal operation mode.

Examples of the maintenance check program are indicated below, in relation to a high-speed range and a low-speed range of the spindle, respectively.

Example of maintenance check program in low-speed range
1: Normal rotation command
2: 1,000 min⁻¹, 30 seconds
3: Vibration measurement
4: 2,000 min⁻¹, 30 seconds
5: Vibration measurement
6: 3,000 min⁻¹, 30 seconds
7: Vibration measurement
8: Stop command
9: Calculate difference value
10: Judge
11: Display and output

Example of maintenance check program in high-speed range
1: Normal rotation command
2: 10, 000 min⁻¹, 30 seconds
3: Vibration measurement
4: 11,000 min⁻¹, 30 seconds
5: Vibration measurement
6: 12,000 min-¹, 30 seconds
7: Vibration measurement
8: Stop command
9: Calculate difference value
10: Judge
11: Display and output

In the present invention, a vibration sensor is arranged on a spindle or a spindle motor of a machine tool, a maintenance check mode is prepared for a numeric control device of the machine tool, and the spindle or the spindle motor is operated in no-load condition according to an operation pattern prepared in the maintenance check mode, whereby vibration data corresponding to the operation pattern may be stored. Therefore, when the operator of the machine tool periodically carries out a check operation according to the maintenance check mode, the numeric control device automatically may output a warning if the vibration data exceeds a certain level.

As the master vibration data, vibration data obtained when initial adjustment or maintenance check of the machine tool is completed may be used. Due to this, an error or a defect of the machine tool may be more precisely detected.

By using a second storing part for storing a plurality of vibration data and an outputting part for outputting information of a change of the vibration based on the plurality of data of the vibration, the operator can check the history of the vibration data.

By preparing a maintenance check mode for operating each component of the numeric control device, the operator may easily carry out a series of operations by selecting the maintenance check mode.

By preparing a plurality of selective maintenance check programs for the operation pattern in maintenance check, a certain operation pattern may be selected and vibration data may be automatically obtained and determined.

## Claims

1. A numeric control device (10) for detecting an error or a defect of a motor or a spindle motor (20) of a machine tool, **characterized in that** the numeric control device comprises:
a first storing part (12) for storing master vibration data (26) of the spindle or the spindle motor (20), the master vibration data (26) being prepared by associating data of the vibration outputted from a vibration sensor (22) arranged on the spindle or the spindle motor (20) with an operation pattern for detecting the defect of the spindle or the spindle motor (20), obtained by rotating the spindle or the spindle motor (20) in no-load condition;
a calculating part (14) for calculating a difference value between newly measured data according to the operation pattern and the master vibration data (26) stored in the first storing part (12);
a judging part (16) for determining that the measured data is abnormal when the difference value calculated by the calculating part (16) exceeds a predetermined reference value; and
an outputting part (18) for outputting information regarding the measured data when the judging part (16) determining that the measured data is abnormal.

2. The numeric control device according to claim 1, **characterized in that** the master vibration data (26) is data of the vibration according to the operation pattern when initial adjustment or maintenance check of the machine tool is completed.

3. The numeric control device according to claim 1, **characterized in that** the numeric control device further comprises a second storing part (30) for storing a plurality of data of the vibration in relation to one operation pattern, and an outputting part (18) for outputting information of a change of the vibration based on the plurality of data of the vibration.

4. The numeric control device according to claim 3, **characterized in that** the operation of the first and second storing parts (12, 30), the calculating part (14), the judging part (16) and the outputting part (18) is prepared as a maintenance check mode of the machine tool.

5. The numeric control device according to claim 1, **characterized in that** the operation pattern is prepared as a plurality of selective maintenance check programs.
